# EUROPÄISCHE PATENTSCHRIFT

(11) **EP 2 657 155 B1**
(45) Veröffentlichungstag und Bekanntmachung des Hinweises auf die Patenterteilung: **14.01.2015**
(21) Anmeldenummer: 13151806.0
(22) Anmeldetag: 18.01.2013
(51) Int. Cl.: B65G 1/04

(54) **Elektronische Absturzsicherung für autonome Shuttle mit Wegmessung und Orientierung**
Electronic crash guard for autonomous shuttle with path measurement and orientation
Protection électronique contre la chute pour navette autonome avec mesure de trajectoire et orientation

(30) Priorität: 23.04.2012 DE 102012206633
(43) Veröffentlichungstag der Anmeldung: 30.10.2013
(73) Patentinhaber: Krones AG, 93073 Neutraubling (DE)
(72) Erfinder: Olszak, Tilo, 93073 Neutraubling (DE)
(74) Vertreter: Grünecker, Kinkeldey, Stockmair & Schwanhäusser

(56) Entgegenhaltungen:
- EP-A1- 1 254 852
- EP-A2- 1 897 839
- WO-A1-2011/128384
- DE-A1- 2 930 569
- GB-A- 2 407 565
- JP-A- 2000 118 639
- JP-A- 2003 034 497
- US-A1- 2005 047 895
- US-A1- 2009 074 545

## Beschreibung

Die Erfindung betrifft ein Kanallagersystem mit ein oder mehreren Kanälen gemäß Patentanspruchs 1, und ein entsprechendes Verfahren gemäß Patentanspruch 11.

Lagersysteme dienen dem Lagern von Ladeeinheiten, die beispielsweise hintereinander auf Paletten oder mit Gitterboxen oder Behältern bereitgestellt werden. Insbesondere sind in der Materialflusstechnik Kanallagersysteme bekannt, die vorteilhaft für große Produktchargen Verwendung finden. Ständer und Auflagen in Palettenregalen werden hierbei zu Kanälen angeordnet. Im Rahmen der automatisierten Regalbedientechnik setzt ein Umsetzgerät, insbesondere ein Regalbediengerät, ein Shuttle oder einen Satelliten in einem Lagerkanal eines Palettenregals ab, so dass das Shuttle oder der Satellit Paletten, Behältern, Kisten etc. einlagern oder abholen kann. Ein Shuttle kann kabellos über Schleifleitungen, die in den Lagerkanälen des Kanallagers vorgesehen sind, mittels berührungsloser Energieübertragung oder durch Batterien, Akkus oder Kondensatoren mit Energie versorgt werden. In einem Kanallager lässt sich mithilfe der Umsetzgeräte eine große Anzahl an vorzugsweise gleichartigen Paletten o.ä. beispielsweise nach dem First-In-First-Out-Prinzip oder First-In-Last-Out-Prinzip in Lagerkanälen handhaben.

Ein oder mehrere Shuttle werden zum Transport insbesondere von Paletten in dem Kanallagersystem eingesetzt, typischerweise aber nur ein Shuttle pro Kanal. Die Systeme weisen häufig mehrfachtiefe Lagerkanäle auf. Der Shuttle kann in die Lagerkanäle ein- oder ausfahren und fährt dabei auf Kanalschienen oder wird durch Kanalschienen geführt. Der Shuttle kann beispielsweise mit Elektromotoren angetrieben werden.

In manuell bedienten Lagern werden Shuttle mit Lastaufnahmemitteln, etwa Gabelstaplern in die Kanäle hineingehoben und wieder abgeholt. Innerhalb der Kanäle kann der Shuttle weitestgehend autonom arbeiten und den gewünschten Transportauftrag erfüllen. Dabei ist ein autonom arbeitendes Shuttle ein Shuttle, dass innerhalb des Kanals im Wesentlichen unabhängig vom oder von der Anwesenheit des Lastaufnahmemittels arbeitet. Somit muss das Lastaufnahmemittel nicht vor dem Kanal stehen bleiben. Für diese Fälle sind die Enden der Kanalschienen jeweils in Fahrtrichtung geschlossen ausgeführt. Der Shuttle kann somit nicht aus dem Kanal fallen. Ein Absturz des Shuttles wird somit verhindert.

In automatisch bedienbaren Lagern werden Regalbediengeräte, RGB, eingesetzt. Das RGB setzt ein Shuttle beispielsweise in einen Kanal an dessen Kanalende hinein oder holen den Shuttle dort ab. Dabei sind die Kanalschienen an den Enden offen ausgeführt. Ein Absturz des Shuttles ist solange zumindest an diesem Kanalende nicht möglich, wie das Lastaufnahmemittel, hier das Regalbediengerät vor dem Lagerkanal positioniert ist. Fährt das Regalbediengerät weg, um zwischenzeitlich einen anderen Auftrag auszuführen, bleibt der autonom arbeitende Shuttle zurück, um beispielsweise in dem Kanal Transportgut umzulagern. Ein Absturz des Shuttles kann nach heutigem Stand der Technik zwar steuerungstechnisch abgesichert werden, jedoch nicht verhindert werden. In automatischen Lagern sind in der Regel die Kanäle aus Gründen vereinfachter mechanischer Ausführung und Montage auf beiden Seiten offen ausgeführt und ein Shuttle könnte so auch unterhalb möglicher Paletten durchfahren und in die benachbarte Lagergasse fallen. Diese Gefahr existiert selbst dann, wenn das Regalbediengerät vor dem einen Ende, also dem Einfahrtsende des Kanals stehen bleibt.

Grundsätzlich sollte die Fahrt von einem oder mehreren Shuttles in allen Lagerkanälen und zwischen Lagerkanälen und richtig positionierten Regalbediengeräten so barrierefrei wie möglich gestaltet sein. In einem Lagersystem, z.B. einem Kanallager mit mehreren Ebenen und Gassen, sollen häufig zur Leistungssteigerung des Systems mehrere Shuttles betrieben werden. Häufig sind auch die Aufnahme von Transportgut und die Abgabe in eine benachbarte Lagergasse gewünscht. Die Shuttles operieren innerhalb der Lagerkanäle weitestgehend autonom und die Regelbediengeräte arbeiten inzwischen an anderen Aufträgen.

Die Shuttles können eine eigene Sicherheitssteuerung besitzen, die dafür sorgen kann, dass die Shuttle nicht in die Regalgassen stürzen. Versagen nun aber die mechanischen oder steuernden Komponenten am Shuttle, kann ein Absturz des Shuttles nicht verhindert werden. Obgleich Lagersysteme einen zutrittsbeschränkten Bereich definieren, kann sich auch Instandhaltungspersonal in diesem Bereich aufhalten, so dass eine Gefahr durch herabstürzende Teile entsteht.

Um Restrisiko zu minimieren, können Absturzstellen mit mechanischen Klinken gesichert werden. Eine Betätigung dieser Klinken durch ein Regalbediengerät wäre zwar möglich, nimmt aber zuviel Zeit in Anspruch, da das Regalbediengerät erst an den Kanal andocken müsste und erst danach die Klinke öffnen könnte.

In einem Servicefall kann es erforderlich sein, dass Servicepersonal eine Lagergasse betreten muss. Bei einem großen Lagersystem ist es unwirtschaftlich, das gesamte System für die Dauer des Servicefalls anzuhalten. Für den betroffenen Bereich ist jedoch sicherzustellen, dass Abstürze von Shuttle in die bereits betretene Lagergasse vermieden werden.

Angesichts des Stands der Technik und der oben diskutierten Probleme ist es Aufgabe der vorliegenden Erfindung, ein Kanallagersystem mit hoher Sicherheit gegen Shuttleabstürze und hoher Effizienz bereitzustellen.

JP 2000 118639 beschreibt ein gattungsgemässes System.

Diese Aufgabe wird gemäß der vorliegenden Erfindung mit Kanallagersystem mit ein oder mehreren Kanälen gemäß Patentanspruch 1 gelöst, ferner mit einem Verfahren gemäß Patentanspruch 11.

Die Erfindung stellt ein Kanallagersystem bereit mit ein oder mehreren Kanälen mit Führungsschienen, umfassend: eine Steuerungseinheit; einen Shuttle mit einer eigensicheren Fahrzeugsteuerung mit einer Kontrolleinheit zur Kommunikation mit der Steuereinheit; Markierungsmittel entlang des Kanals; wobei der Shuttle Sensorik zur Orientierung des Shuttles innerhalb des Kanals anhand der Markierungsmittel umfasst; wobei die Markierungsmittel Löcher in den Schienen umfassen, wobei der Shuttle wenigstens zwei Lichttaster zum Abtasten der Löcher in den Schienen umfasst; wobei das Kanalende mittels zweier neben- oder übereinanderliegender Löcher markiert ist, derart dass die wenigstens zwei Lichttaster die beiden Löcher abtasten.

Mit Löchern in den Schienen sind typischerweise gleichartige Löcher für beide Schienen gemeint. D.h. sofern die in Fahrtrichtung des Shuttles betrachtete linke Führungsschiene ein Markierungsloch aufweist, weist im Allgemeinen auch die rechte Führungsschiene ein Loch auf, und zwar im Wesentlichen an der entsprechend gleichen Stelle wie für die linke Schiene. Ein Lichttaster ist typischerweise eine Lichtquelle, etwa eine Leuchtdiode oder kalte Lichtquelle, die auf dem Shuttle als Lichtemitter vorgesehen ist und ferner einen Lichtempfänger umfasst, der typischerweise reflektiertes Licht erfasst und beispielsweise die Veränderung der Helligkeit des erfassten Lichts anzeigen kann. Diese hat den Vorteil, dass der Taster auf dem Shuttle vorgesehen werden kann, so dass die Meldungen des Shuttle von der Kontrolleinheit des Shuttle lokal verarbeitet werden können. Es kann in Einzelfällen auch zusätzlich noch ein Konzept von Lichtschranken vorgesehen werden, wobei sichergestellt werden sollte, dass diese nicht durch Gegenstände, etwa Transportgut unterbrochen werden können. Durch diese Konzepte kann die Position des Shuttles bestimmt werden. Bei Erreichen einer kritischen Position kann der Shuttle eine Haltposition einnehmen und es kann ein Absturz verhindert werden.

Der Shuttle umfasst wenigstens zwei Lichttaster, wobei das Kanalende mittels zweier neben- oder übereinanderliegender Löcher markiert ist, derart dass die wenigstens zwei Lichttaster die beiden Löcher abtasten. Hierdurch ergibt sich die Möglichkeit, das Kanalende, also beide Kanalenden jeweils besonders markieren zu können. Erkennt der Shuttle somit das Kanalende, kann ein Absturz verhindert werden.

Die Steuerungseinheit kann typischerweise in dem System vorgesehen sein, beispielsweise als eine übergeordnete Materialflusssteuerung oder als eine oder mehrere Steuerungseinheiten, die von festen oder mobilen Stationen, beispielsweise Lastaufnahmemittel oder Regalbediengeräten operiert. Durch die Kommunikation zwischen der Fahrzeugsteuerung, insbesondere der Kontrolleinheit der Fahrzeugsteuerung und der Steuerungseinheit können Informationen ausgetauscht werden, die den Shuttle überwachen können. Dabei versteht sich, dass der Shuttle innerhalb des Kanals weiterhin autonom arbeitet. Die Kommunikation ist als eine Sicherungsschicht zu verstehen. Der Shuttle besitzt eine eigensichere Fahrzeugsteuerung. Dabei soll der Begriff eigensicher so verstanden werden, das die Normalposition des Shuttles eine Haltposition ist. Diese kann auch als "sicherer Halt" bezeichnet werden. Wird diese Position plötzlich eingenommen, kann der "sichere Halt" auch als "Nothalt" bezeichnet werden. Eigensicher bedeutet nun, dass Energie verwendet wird, damit der Shuttle fährt. Im Fehlerfall verbleibt der Shuttle in der Position "sicherer Halt" oder kehrt in diese Position zurück.

In dem System kann die Fahrzeugsteuerung eine Fahrt des Shuttles unterbrechen und den Shuttle zum Halt an seiner augenblicklichen Position bringen, wenn die Sensorik beim Erkennen der Markierungsmittel eine vorgegebene Toleranz überschreitet und/oder wenn die Kontrolleinheit eine Abweichung von einem vordefinierten Ereignis registriert oder wenn ein Kanalende erkannt wird.

Ein Fehlerfall kann also eintreten, wenn die Sensorik beim Erkennen der Markierungsmittel eine vorgegebene, vordefinierte Toleranz überschreitet. Beispielsweise kann gefordert werden, dass Markierungsmittel in bestimmten, regelmäßigen Zeitabständen erkannt werden müssen oder dass entlang bestimmter Wegstrecken eine vorgegebene Zahl von Markierungsmitteln erkannt werden muss. Ebenso kann wenigstens das Erkennen eines bestimmten Markierungsmittels gefordert werden oder das Erkennen des Kanalendes, wobei das Kanalende durch ein bestimmtes Markierungsmittel ausgewiesen sein kann. Es versteht sich, dass ein Kanal in der Regel zwei Kanalenden besitzt und der Begriff Kanalende sinngemäß für beide Kanalenden zu verstehen ist. Es versteht sich auch, dass ein Kanalende etwa durch ein vor dem Kanalende platziertes Lageraufnahmemittel, etwa ein Regalbediengerät, gesichert sein kann, jedoch die Sensorik eine weitere Schicht von redundanten Sicherheitsmaßnahmen vorsehen kann. Ein vordefiniertes Ereignis kann auch das Erhalten oder Rückbestätigen einer Kommunikation sein. Diese kann auch an Bedingungen wie das Erkennen bestimmter Markierungsmittel oder das Zurücklegen bestimmter Wegstrecken gebunden sein oder damit verknüpft sein. Dadurch kann eine weitere redundante Sicherheitsschicht vorgesehen werden. Ein Absturz des Shuttle kann somit verhindert werden.

Die Kontrolleinheit kann eine Watchdog-Kontrolleinheit umfassen.

Diese Komponente stellt eine Komponente des Systems, hier der Kontrolleinheit da, die die Funktion anderer Komponenten überwachen kann. Wird dabei eine mögliche Fehlfunktion erkannt, so wird entsprechend einer Systemvereinbarung diese Fehlfunktion signalisiert und es werden Maßnahmen zur Behebung des Problems eingeleitet. Gleichzeitig, in Verbindung mit der eigensicheren Steuerung geht typischerweise der Shuttle in eine sichere Halteposition, solange wie die Watchdog-Kontrolleinheit das Fortbestehen des Problems anzeigt. Somit kann eine besonders sichere Überwachung des autonomen Shuttles vorgesehen sein.

In dem System kann ein Wireless-Lan-System, WLAN, ein Schmalfunksystem, ein Infrarot-System, oder ein Bluetooth-System zur Kommunikation zwischen der Steuereinheit und der Kontrolleinheit vorgesehen sein.

Die Kommunikation zwischen der Steuereinheit des Systems, etwa der zentralen Materialflusssteuerung oder Steuerungseinheiten von Regalbediengeräten kann mittels verschiedener Kommunikationssysteme erfolgen. Abhängig von dem gewählten System kann die Reichweite der Kommunikation unterschiedlich sein.

Die Markierungsmittel können Codes, insbesondere Barcodes, an den Schienen umfassen und der Shuttle kann einen Codeleser, Codereader, zum Lesen der Barcodes umfassen.

Die Markierungsmittel können RFID-Transponder an den Schienen umfassen und der Shuttle kann einen RFID-Reader umfassen.

Der Shuttle kann eine Antriebsachse mit Antriebsrollen und einen Drehgeber an der Antriebsachse des Shuttles umfassen, wobei die Sensorik ausgebildet sein kann, die Wegstrecke auf Basis des Durchmessers der Antriebsrollen zu erfassen.

Durch Kenntnis der Verhältnisse der Antriebachse und des Durchmessers der Antriebsrollen kann der Shuttle mittels des Drehgebers eine zurückgelegte Wegstrecke bestimmen. Beispielsweise kann das relative zu einer vorher erfassten Markierung sein. Der Shuttle kann beispielsweise auch vom Beginn des Kanals, also nach Einsetzen durch das Regalbediengerät die in eine Richtung zurückgelegte Wegstrecke bestimmen. Durch Verwendung des Drehgebers kann auch die Drehrichtung der Antriebsachse und damit das Addieren oder Subtrahieren weiterer Wegstrecke berücksichtigt werden. D.h. zusätzlich zu der Sensorik, die sich an den Markierungspunkten orientiert kann der Shuttle auch seine momentane Position durch Berechnung bestimmen. Diese Bestimmung kann zudem unabhängig von einer Kommunikation mit der Steuereinrichtung sein. Alternativ kann die bestimmte Position mit der anhand der Markierungsmittel bestimmten Position verglichen werden. Erneut bietet sich hier die Möglichkeit, eine zusätzlichen redundanten Sicherheitsschicht. Erkennt der Shuttle, dass eine kritische Wegstrecke zurückgelegt wurde oder stimmt per Wegstrecke ermittelte Position nicht mit der durch Markierungsmittel ermittelte Position überein, so kann der Shuttle eine Halteposition einnehmen und ein Fehler oder gar ein Absturz verhindert werden.

Dabei können die Löcher in den Schienen zur Referenz einzelner Stellplätze dienen oder zur Markierung von Fahrstrecken; wobei das Kanalende mittels einer redundanten Markierung angezeigt werden kann, beispielsweise durch Doppellöcher.

In dem System kann wenigstens an der Position des Kanalendes ein WLAN-Zugangsknoten erreichbar sein.

In dem System kann der Shuttle wenigstens eine WLAN-Antenne umfassen.

Im Bereich der Kanalenden kann typischerweise eine WLAN-Verbindung vorgesehen sein. Der Shuttle kann beispielsweise eine WLAN-Antenne umfassen, etwa in der Mitte des Shuttles positioniert oder der Shuttle kann an seinem vorderen und an seinem hinteren Ende eine WLAN-Antenne umfassen. Somit kann die Kommunikation im Bereich des Kanalendes gewährleistet werden. Ebenso kann die Möglichkeit bereitgestellt werden, im wichtigen Bereich des Kanalendes eine Kommunikation aufbauen zu können.

Die Erfindung umfasst ferner ein Verfahren zum absturzsicheren Betreiben eines Shuttles in einem Kanallagersystem, mit einer eigensicheren Fahrzeugsteuerung, mit einer Kontrolleinheit zur Kommunikation mit der Steuereinheit; mit Markierungsmitteln entlang des Kanals, wobei der Shuttle Sensorik zur Orientierung des Shuttles innerhalb des Kanals anhand der Markierungsmittel umfasst; mit den Schritten: Fahren des Shuttles im Kanal, dabei Erfassen der aktuellen Position des Shuttles mittels der Sensorik; Anhalten des Shuttles an seiner augenblicklichen Position bei Erkennen einer Abweichung von einem vordefinierten Ereignis und/oder wenn beim Erkennen der Markierungsmittel eine vorgegebene Toleranz überschritten wird oder wenn ein Kanalende erkannt wird; wobei die Markierungsmittel Löcher in den Schienen umfassen und wobei der Shuttle wenigstens zwei Lichttaster umfasst, wobei Erfassen der aktuellen Position des Shuttles Abtasten der Löcher in den Schienen mittels der wenigstens zwei Lichttaster umfasst, wobei das Kanalende mittels zweier neben- oder übereinanderliegender Löcher markiert ist..

In dem Verfahren kann ein Wireless-Lan-System, WLAN, ein Schmalfunksystem, ein Infrarot-System, oder ein Bluetooth-System zur Kommunikation zwischen der Steuereinheit und der Kontrolleinheit vorgesehen sein.

Das Verfahren kann ferner das Bereitstellen eines Lastaufnahmemittels, insbesondere eines Regalbediengeräts vor dem Kanalende umfassen, und das Melden an den Shuttle, dass das Lastaufnahmemittel bereitgestellt ist.

Das Verfahren kann ferner umfassen, dass der Shuttle, wenn der Shuttle in seiner augenblicklichen Position zum Halt gekommen ist, diese nur dann verlassen, wenn die Kontrolleinheit von der Steuereinheit die Meldung erhält, dass das Lastaufnahmemittel bereitgestellt ist.

Somit wird sichergestellt, dass vor einem Betreten der Lagergassen durch Servicepersonal sich alle Shuttles in den an die Lagergasse angrenzenden Lagerkanälen in einem sicheren Halt befinden. Ferner wird sichergestellt, dass für die Zeit des Servicefalls in diese Lagerkanäle keine weiteren Shuttle über benachbarte Lagergassen einfahren.

Es gilt also, dass die Erfindung ein sicheres Betreiben, Fahren von autonomen Shuttles in Kanallagersystemen ermöglicht. Dabei kann mit geringem technischen Aufwand die berührungslose Wirkweise realisiert werden. Entsprechend ist damit ein geringer Wartungsaufwand verbunden und die Zahl der Störquellen minimiert.

Der Gegenstand der Erfindung wird anhand der nachfolgenden Zeichnungen beispielhaft erläutert.

Es zeigen:
- Figur 1:: Schematische Seitenansicht eines Kanals eines Kanallagersystems und eines Shuttles in dem Kanal.
- Figur 2:: Schematische Aufsicht auf ein Kanallagersystem mit Shuttles und Regalbediengerät.
- Figur 3:: Schematische Ansicht eines Regalbediengerätes und eines Shuttles mit Antennen.

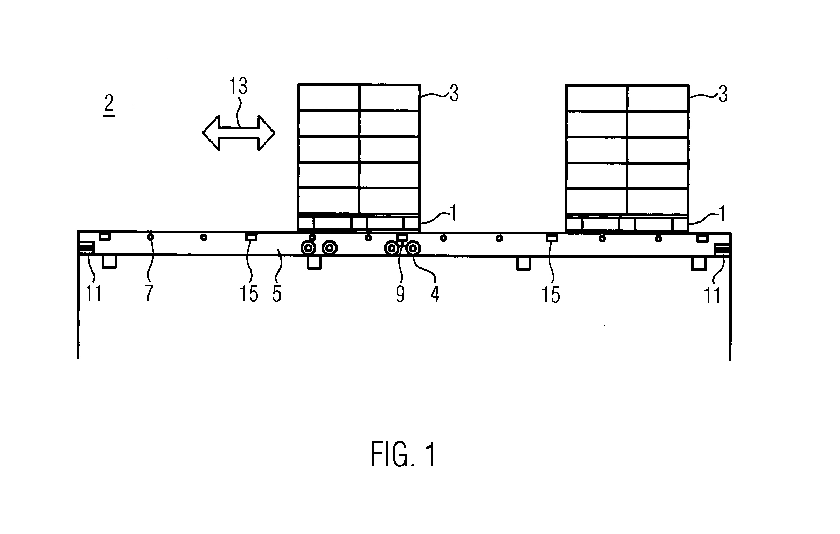

Die Figur 1 zeigt eine schematische Ansicht eines Kanals eines Kanallagersystems und eines Shuttles in dem Kanal. In einem Kanal 2 eines Kanallagersystems ist in Figur 1 ein Shuttle 1 gezeigt. Der Shuttle 1 befindet sich unterhalb der Palette (vom Shuttle 1 sind in dieser Ansicht nur vier schwarze Rollen zu sehen) und transportiert Transportgut 3, beispielsweise auf Paletten. Der Shuttle fährt auf Kanalschienen 5 in dem Kanal 2. Es ist in der Seitenansicht der Figur 1 nur eine Kanalschiene oder Führungsschiene 5 sichtbar, es soll aber verstanden sein, dass es eine weitere Kanalschiene in dem Kanal 2 gibt, die der Schiene 5 entspricht. Der Shuttle 1 umfasst Antriebsräder 4, die in Figur 1 beispielhaft paarweise gezeichnet sind. Die Antriebsräder 4 können von einem geeigneten Antrieb, etwa einem Elektromotor angetrieben werden. Die Kanalschienen 5 weisen in Figur 1 verschiedene Markierungsmittel auf, hier in Form von Löchern oder Markern. Insbesondere zeigt Figur 1 Löcher 7, die auch als Zwischenpositionsmarkierungen betrachtet werden können. Diese Löcher sind insbesondere zwischen Stellplätzen zu finden, wie sie mittels der Stellplatzpositionsmarkierungen 9 und 15 markiert sind. Typischerweise unterscheiden sich die Markierungen 7 von den Markierungen 9 und 15, so dass optisch oder durch mechanische oder berührungslose Abtastung, etwa magnetische, induktive oder kapazitive Abtastung, festgestellt werden kann, welche Art von Markierungen abgetastet wurde. Die Shuttle 1 können entsprechend dem Pfeil 13 in dem Kanal 2 sich hin und her bewegen. Dabei kann eine Kontrolleinheit (hier nicht gezeigt), beispielsweise eine Watchdog-Kontrolleinheit im oder am Shuttle 1 vorgesehen sein.

Mit einer doppelten Markierung 11 ist jeweils das in dieser Zeichnung linke und rechte Kanalende markiert. Der Shuttle 1 kann einen Lichttaster (hier nicht gezeigt) umfassen der im oder am Shuttle angebracht ist und sich mit dem Shuttle 1 mit bewegt. Insbesondere kann der Shuttle 1 auch mehrere Lichttaster umfassen. Diese können alle von der gleichen Art sein. Wenn zwei der Lichttaster die doppelten Markierungen 11 ertastet, beispielsweise durch veränderte Reflexion von Licht an der Schiene, kann der Shuttle 1 in eine sichere Halteposition gehen, d.h. der Shuttle 1 hält an. Somit kann ein Absturz des Shuttles am jeweiligen Kanalende vermieden werden. Die Antriebsräder 4, die hier paarweise gezeigt sind, sind in ihrer Größe, d.h. Raddurchmesser und Rollverhalten bekannt. Insbesondere können die Antriebsräder 4 oder der Shuttle einen Drehgeber oder Drehzähler (hier nicht gezeigt) umfassen, der geeignet ist, die zurückgelegte Wegstrecke des Shuttles 1 innerhalb des Kanals 2 ab einem vorgegebenen Referenzpunkt zu berechnen. Als Referenzpunkte können beispielsweise die Markierungen 11, 15, 9 oder 7 dienen.

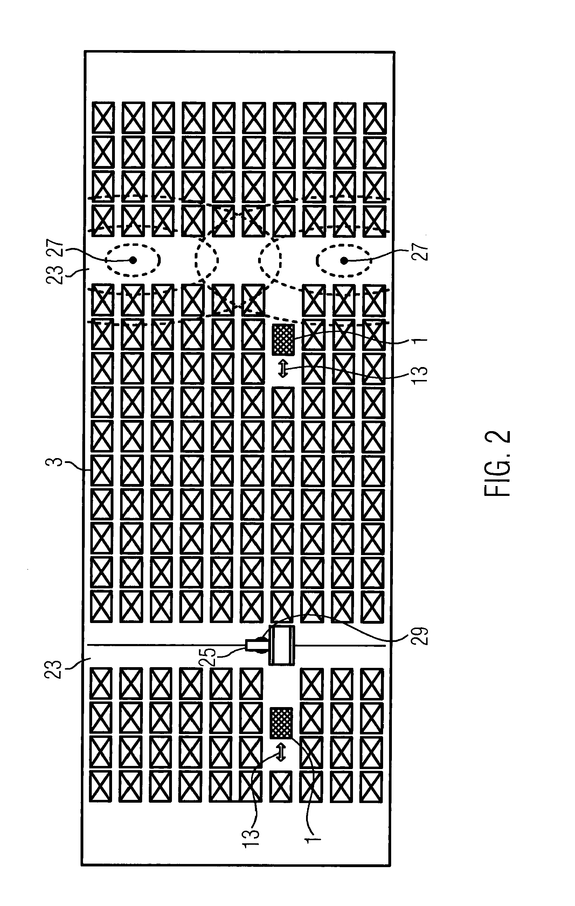

Die Figur 2 zeigt eine Aufsicht auf ein Kanallagersystem mit Kanälen 21, die dem in der Figur 1 skizzierten Kanal 2 entsprechen können. Die Gassen des Systems sind üblicherweise gleich breit und werden durch die Konstruktion des Regalbediengerätes und die Dimension der Paletten plus Toleranzen definiert. Beispielhaft ist ein Shuttle 1 in einem Kanal gezeigt, dass sich entsprechend des Pfeils 13 bewegen kann. In dem Kanallagersystem sind Transportgüter 3 an entsprechenden Transportgutstellplätzen gezeigt. In Figur 2 sind die Stellplätze und Transportgüter 3 alle praktisch von der gleichen Größe und in regelmäßiger Weise aufgestellt. Es ist aber ebenfalls möglich, dass andere Ordnungstrukturen und andere Größen von Transportgütern in Kanallagersystemen auftreten. In Figur 2 sind Antennen / Access-Points 27 in den Gassen 23 gezeigt. Ferner ist ein Regalbediengerät 25 gezeigt, das eine Richtantenne 29 trägt. Mit Hilfe der Access-Points 27 und der Richtantenne 29 auf dem Regalbediengerät kann eine drahtlose Kommunikation mit dem Shuttle 1 in dem Kanal vorgenommen werden. Der Shuttle 1 trägt dabei ebenfalls mindestens eine Antenne (hier nicht gezeigt), beispielsweise eine WLAN-Antenne. Somit kann die Kommunikation mit einem vor dem Kanal positionierten Regalbediengerät 25 gewährleistet werden. Bei sehr großen Lagern, das heißt bei sehr tiefen Kanälen ist es vor allem wichtig, dass im Bereich der Kanalenden eine Kommunikation gewährleistet wird. Ein Abreißen der Kommunikation zwischen Shuttle 1 und Regalbediengerät 25 kann höchstens dann toleriert werden, wenn der Shuttle 1 eine bestimmte Wegstrecke in die tiefe des Kanals zurückgelegt hat. Entsprechend kann eine Fahrzeugsteuerung des Shuttles 1 instruiert werden. Ist der Shuttle 1 im Bereich des Kanalendes angekommen, also insbesondere wenn eine Übergabe an ein Regalbediengerät 25 erfolgen soll, baut der Shuttle 1 die drahtlose Verbindung automatisch wieder auf.

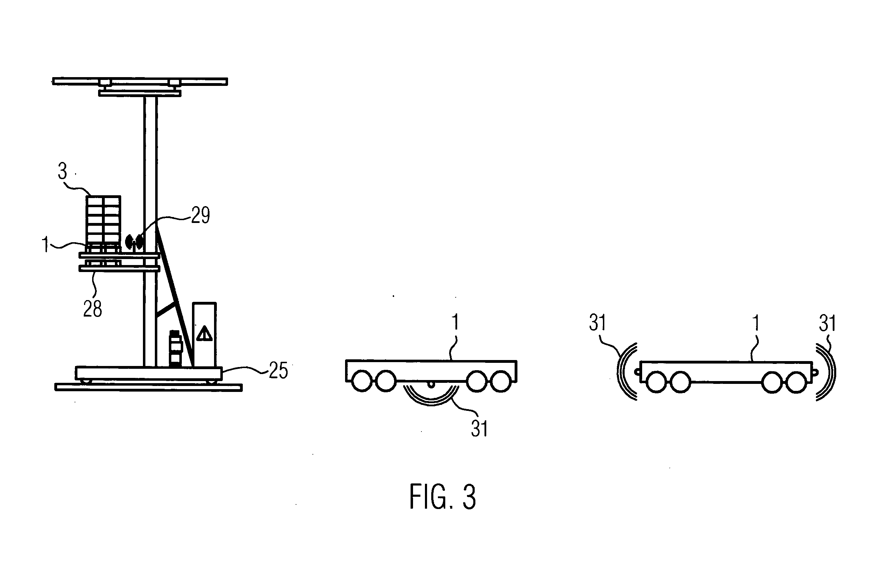

Die Figur 3 zeigt noch weitere Aspekte des Regalbediengerätes 25 und des Shuttle 1 im Hinblick auf die Antennensteuerung, wie sie in den Systemen eingesetzt werden kann, die in den Figuren 1 oder 2 dargestellt sind. Figur 3 zeigt ein Regalbediengerät 25 mit einer Richtantenne 29 auf einem Hubkorb 28. Auf dem Hubkorb 28 ist Transportgut 3 gezeigt. Dieses kann sich auf einem Shuttle 1 auf dem Hubkorb 28 befinden, wie in Figur 3 gezeigt, oder auf einer einfachen Transportpalette, Im vorliegenden Beispiel steht das Transportgut 28 auf einer Palette und die Palette auf dem Shuttle 1. Die Richtantenne 29 kann zusätzlich mit einem Shuttle 1 kommunizieren, wie im unteren Teil der Figur 3 gezeigt. Der Shuttle 1 kann eine Antenne 31 besitzen, die etwa mittig am oder unter oder im Shuttle 1 angebracht ist. Ebenso kann der Shuttle 1 jeweils an seinem vorderen und hinteren Ende eine Antenne 31 aufweisen. Dabei versteht es sich, dass der Shuttle 1 bezogen auf die Fahrtrichtung typischerweise symmetrisch aufgebaut ist.

Möchte Service-Personal eine Lagergasse betreten, so meldet sich dieses Service-Personal in der Regel mit einem mechanischen und/oder elektronischen Schlüsselschalter an. Der Zugangswunsch wird registriert und zumindest in dem entsprechenden Regalbereich, d.h. den unmittelbar benachbarten Gassen werden alle Shuttles in eine sichere Halteposition verfahren, beispielsweise am Kanalende oder die Shuttles werden an ihrer augenblicklichen Position angehalten. Erst wenn eine Rückmeldung von allen betroffenen Kanälen und allen betroffenen Shuttles erhalten worden ist im Hinblick darauf, dass keine Aktivität der Shuttle in dem betroffenen Bereich mehr vorliegt, kann der Zugang gewährt werden.

Zu jeder Zeit gilt, dass Shuttles, die sich nicht zurückmelden können oder konnten mittels der eigensicheren Fahrzeugsteuerung, insbesondere der Watchdog-Kontrolleinheit in einen Nothalt versetzt werden. Diese stellen also ebenfalls keine Gefahr dar. Die entsprechenden Sicherheitsstufen machen es erforderlich, dass ein gestörter Shuttle in einem entsprechenden Kanal aufgrund der Steuerung des Systems gemeldet wird. Gegebenenfalls kann eine Kommunikation mit dem Shuttle hergestellt werden, indem ein Regalbediengerät vor ein Kanalende gefahren wird.

## Patentansprüche

1. Kanallagersystem mit ein oder mehreren Kanälen (2) mit Führungsschienen (5), umfassend:
eine Steuerungseinheit;
einen Shuttle (1) mit einer eigensicheren Fahrzeugsteuerung mit einer Kontrolleinheit zur Kommunikation mit der Steuereinheit;
Markierungsmittel (7, 9, 11) entlang des Kanals (2);
wobei der Shuttle (1) Sensorik zur Orientierung des Shuttles (1) innerhalb des Kanals (2) anhand der Markierungsmittel (7, 9, 11) umfasst;
wobei die Markierungsmittel (7, 9, 11) Löcher in den Schienen (5) umfassen, wobei der Shuttle (1) wenigstens zwei Lichttaster zum Abtasten der Löcher in den Schienen (5) umfasst; **dadurch gekennzeichnet, dass**
das Kanalende mittels zweier neben- oder übereinanderliegender Löcher (11) markiert ist, derart dass die wenigstens zwei Lichttaster die beiden Löcher abtasten.

2. System gemäß Anspruch 1, wobei die Fahrzeugsteuerung eine Fahrt des Shuttles (1) unterbricht und den Shuttle (1) zum Halt an seiner augenblicklichen Position bringt, wenn die Sensorik beim Erkennen der Markierungsmittel (7, 9, 11) eine vorgegebene Toleranz überschreitet und/oder wenn die Kontrolleinheit eine Abweichung von einem vordefinierten Ereignis registriert oder wenn ein Kanalende erkannt wird.

3. System gemäß wenigstens einem der Ansprüche 1 und 2 wobei die Kontrolleinheit eine Watchdog-Kontrolleinheit umfasst.

4. System gemäß Anspruch 1 oder 2, ferner mit einem Wireless-Lan-System, WLAN, einem Schmalfunksystem, einem Infrarot-System, oder einem Bluetooth-System zur Kommunikation zwischen der Steuereinheit und der Kontrolleinheit.

5. System gemäß wenigstens einem der Ansprüche 1 - 3, wobei die Markierungsmittel Codes, insbesondere Barcodes, an den Schienen (5) umfassen und der Shuttle einen Codeleser, Codereader, zum Lesen der Barcodes umfasst.

6. System gemäß wenigstens einem der Ansprüche 1 - 3, wobei die Markierungsmittel RFID-Transponder an den Schienen (5) umfassen und der Shuttle einen RFID-Reader umfasst.

7. System gemäß Anspruch 3, wobei der Shuttle (1) eine Antriebsachse mit Antriebsrollen (4) und einen Drehgeber an der Antriebsachse (4) des Shuttles (1) umfasst, wobei die Sensorik ausgebildet ist, die Wegstrecke auf Basis des Durchmessers der Antriebsrollen (4) zu erfassen.

8. System gemäß Anspruch 3 oder 5, wobei die Löcher (7, 9, 11) in den Schienen (5) zur Referenz einzelner Stellplätze dienen oder zur Markierung von Fahrstrecken; wobei das Kanalende mittels einer redundanten Markierung (11) angezeigt wird, beispielsweise mit Doppellöchern.

9. System gemäß Anspruch 3 in Verbindung mit wenigstens einem der Ansprüche 5 - 7, wobei für den Shuttle wenigstens an der Position des Kanalendes ein WLAN-Zugangsknoten (27) erreichbar ist.

10. System gemäß Anspruch 3 in Verbindung mit wenigstens einem der Ansprüche 5 - 8, wobei der Shuttle wenigstens eine WLAN-Antenne (31) umfasst.

11. Verfahren zum absturzsicheren Betreiben eines Shuttles (1) in einem Kanallagersystem, mit einer eigensicheren Fahrzeugsteuerung, mit einer Kontrolleinheit zur Kommunikation mit der Steuereinheit; mit Markierungsmitteln (7, 9, 11) entlang des Kanals (2), wobei der Shuttle (1) Sensorik zur Orientierung des Shuttles (1) innerhalb des Kanals (2) anhand der Markierungsmittel (7, 9, 11) umfasst; mit den Schritten:
Fahren des Shuttles (1) im Kanal, dabei Erfassen der aktuellen Position des Shuttles (1) mittels der Sensorik;
Anhalten des Shuttles (1) an seiner augenblicklichen Position bei Erkennen einer Abweichung von einem vordefinierten Ereignis und/oder wenn beim Erkennen der Markierungsmittel eine vorgegebene Toleranz überschritten wird oder wenn ein Kanalende erkannt wird;
wobei die Markierungsmittel (7, 9, 11) Löcher in den Schienen (5) umfassen und wobei der Shuttle (1) wenigstens zwei Lichttaster umfasst,
**gekennzeichnet dadurch, dass** Erfassen der aktuellen Position des Shuttles (1) Abtasten der Löcher in den
Schienen (5) mittels der wenigstens zwei Lichttaster umfasst, wobei das Kanalende mittels zweier neben- oder übereinanderliegender Löcher markiert ist.

12. Verfahren gemäß Anspruch 11, mit einem Wireless-Lan-System, WLAN, einem Schmalfunksystem, einem Infrarot-System, oder einem Bluetooth-System zur Kommunikation zwischen der Steuereinheit und der Kontrolleinheit.

13. Verfahren gemäß wenigstens einem der Ansprüche 11 - 12, ferner mit dem Schritt Bereitstellen eines Lastaufnahmemittels (25), insbesondere eines Regalbediengeräts vor der Kanalende, und Melden an den Shuttle (1), dass das Lastaufnahmemittel (25) bereitgestellt ist.

14. Verfahren gemäß Anspruch 13, wobei wenn der Shuttle (1) in seiner augenblicklichen Position zum Halt gekommen ist, er diese nur dann verlassen kann, wenn die Kontrolleinheit von der Steuereinheit die Meldung erhält, dass das Lastaufnahmemittel (25) bereitgestellt ist.

## Claims

1. Channel storage system having one or more channels (2) with guide rails (5), comprising:
a control unit;
a shuttle (1) having an intrinsically safe vehicle controller with a checking unit for communicating with the control unit;
marker means (7, 9, 11) along the channel (2);
the shuttle (1) having sensors for orienting the shuttle (1) within the channel (2) using the marker means (7, 9, 11);
which marker means (7, 9, 11) comprise holes in the rails (5), and the shuttle (1) has at least two light sensors for scanning the holes in the rails (5);
**characterised in that** the channel end is marked by means of two holes (11) lying adjacent to one another or one above the other so that the at least two light sensors scan the two holes.

2. System as claimed in claim 1, in which the vehicle controller interrupts a movement of the shuttle (1) and brings the shuttle (1) to a halt in its instantaneous position if a predefined tolerance has been exceeded on detection of the marker means (7, 9, 11) by the sensors and/or if the checking unit logs a variance from a predefined event or if a channel end is detected.

3. System as claimed in one of claims 1 and 2, in which the checking unit comprises a watchdog checking unit.

4. System as claimed in claim 1 or 2, further comprising a wireless LAN system, WLAN, a narrowcasting system, an infrared system or a Bluetooth system to provide communication between the control unit and checking unit.

5. System as claimed in at least one of claims 1 - 3, in which the marker means comprise codes, in particular bar codes, on the rails (5) and the shuttle has a code reader for reading the bar codes.

6. System as claimed in at least one of claims 1 - 3, in which the marker means comprise RFID transponders on the rails (5) and the shuttle has an RFID reader.

7. System as claimed in claim 3, in which the shuttle (1) has a drive shaft with drive rollers (4) and a rotary transducer on the drive shaft (4) of the shuttle (1) and the sensors are configured to detect the travel distance on the basis of the diameter of the drive rollers (4).

8. System as claimed in claim 3 or 5, in which the holes (7, 9, 11) in the rails (5) serve as a reference for storage spaces or for marking travel distances, and the channel end is indicated by means of a redundant marker (11), for example double holes.

9. System as claimed in claim 3 in conjunction with at least one of claims 5 - 7, in which a WLAN access node (27) can be obtained for the shuttle, at least at the position of the channel end.

10. System as claimed in claim 3 in conjunction with at least one of claims 5 - 8, in which the shuttle has at least one WLAN antenna (31).

11. Method of safeguarding operation of a shuttle (1) in a channel storage system to prevent falling, having an intrinsically safe vehicle controller with a checking unit for communicating with the control unit; with marker means (7, 9, 11) along the channel (2), the shuttle (1) having sensors for orienting the shuttle (1) within the channel (2) using the marker means (7, 9, 11); comprising the steps:
moving the shuttle (1) in the channel whilst detecting the current position of the shuttle (1) by means of the sensors;
bringing the shuttle (1) to a halt in its instantaneous position on detecting a variance from a predefined event and/or if a predefined tolerance has been exceeded on detecting the marker means or if a channel end is detected;
which marker means (7, 9, 11) comprise holes in the rails (5) and the shuttle (1) has at least two light sensors, **characterised in that** detection of the current position of the shuttle (1) comprises scanning the holes in the rails (5) by means of the at least two light sensors, the channel end being marked by means of two holes lying adjacent to one another or one above the other.

12. Method as claimed in claim 11, with a wireless LAN system, WLAN, a narrowcasting system, an infrared system or a Bluetooth system, to provide communication between the control unit and the checking unit.

13. Method as claimed in at least one of claims 11 - 12, further comprising the step of putting in place a load handling means (25), in particular a storage and retrieval machine, in front of the channel end and sending a message to the shuttle (1) that the load handling means (25) is in place.

14. Method as claimed in claim 13, whereby when the shuttle (1) has come to a halt in its instantaneous position, it cannot leave it again until the checking unit receives the message from the control unit that the load handling means (25) is in place.

## Revendications

1. Système de stockage par rayonnages à canaux-navette avec un ou plusieurs canaux (2) à rails de guidage (5), comprenant :
une unité de commande ;
une navette ou shuttle (1) comportant une commande de véhicule à sécurité intrinsèque et comportant une unité de contrôle pour la communication avec l'unité de commande ;
des moyens formant des marquages (7, 9, 11) le long du canal (2) ;
système
dans lequel la navette (1) comprend un ensemble de détection pour l'orientation de la navette (1) à l'intérieur du canal (2) au regard des moyens formant des marquages (7, 9, 11) ;
dans lequel les moyens formant des marquages (7, 9, 11) englobent des trous dans les rails (5), et la navette (1) comporte au moins deux cellules de détection optiques pour détecter les trous dans les rails (5),
**caractérisé en ce que** l'extrémité du canal est marquée par deux trous (11) placés côte à côte ou superposés, de manière à ce que lesdites au moins deux cellules de détection optiques détectent les deux trous.

2. Système selon la revendication 1, dans lequel la commande de véhicule interrompt la circulation de la navette (1) et amène la navette (1) à l'arrêt au niveau de sa position instantanée actuelle, lorsque l'ensemble de détection, au cours de la détection des moyens formant des marquages (7, 9, 11), dépasse une tolérance prédéterminée, et/ou lorsque l'unité de contrôle enregistre un écart par rapport à un évènement prédéfini, ou lorsqu'une extrémité de canal est reconnue.

3. Système selon l'une au moins des revendications 1 et 2, dans lequel l'unité de contrôle est une unité de contrôle du type chien de garde.

4. Système selon la revendication 1 ou la revendication 2, comprenant, en outre, un système sans fil Lan, WLAN, un système radio à diffusion ciblée, un système infrarouge ou un système Bluetooth pour la communication entre l'unité de commande et l'unité de contrôle.

5. Système selon l'une au moins des revendications 1 - 3, dans lequel les moyens formant des marquages comportent des codes, en particulier des codes-barres, sur les rails (5), et la navette comprend un lecteur de codes, pour lire les codes-barres.

6. Système selon l'une au moins des revendications 1 - 3, dans lequel les moyens formant des marquages comportent des transpondeurs du type RFID sur les rails (5), et la navette comprend un lecteur RFID.

7. Système selon la revendication 3, dans lequel la navette (1) comprend un essieu moteur (4) et un capteur de rotation sur l'essieu moteur (4) de la navette (1), et dans lequel ledit ensemble de détection est conçu pour relever le parcours de déplacement sur la base du diamètre des roulettes motrices (4).

8. Système selon la revendication 3 ou la revendication 5, dans lequel les trous (7, 9, 11) dans les rails (5) servent de référence d'emplacements de dépôt individuels ou pour le marquage de parcours de circulation, et dans lequel l'extrémité de canal est indiquée par un marquage redondant (11), par exemple à l'aide de trous doubles.

9. Système selon la revendication 3 en combinaison avec l'une au moins des revendications 5 - 7, dans lequel un noeud d'accès WLAN (27) est accessible à la navette au moins au niveau de la position de l'extrémité de canal.

10. Système selon la revendication 3 en combinaison avec l'une au moins des revendications 5 - 8, dans lequel la navette comporte au moins une antenne WLAN (31).

11. Procédé pour faire fonctionner, sans risque de chute, une navette (1) dans un système de stockage par rayonnages à canaux-navette comprenant une commande de véhicule à sécurité intrinsèque et comportant une unité de contrôle pour la communication avec l'unité de commande ; et comportant également des moyens formant des marquages (7, 9, 11) le long du canal (2), la navette (1) comprenant un ensemble de détection pour l'orientation de la navette (1) à l'intérieur du canal (2) au regard des moyens formant des marquages (7, 9, 11) ; le procédé présentant les étapes suivantes :
circulation de la navette (1) dans le canal tout en relevant la position instantanée actuelle de la navette (1) à l'aide de l'ensemble de détection ;
arrêt de la navette (1) au niveau de sa position instantanée actuelle lorsque l'unité de contrôle enregistre un écart par rapport à un évènement prédéfini, et/ou lorsque lors de la détection des moyens formant des marquages, une tolérance prédéterminée est dépassée, ou lorsqu'une extrémité de canal est reconnue ;
les moyens formant des marquages (7, 9, 11) englobant des trous dans les rails (5), et la navette (1) comportant au moins deux cellules de détection optiques,
**caractérisé en ce que** le relevé de la position instantanée actuelle de la navette (1) comprend la détection des trous dans les rails (5) au moyen desdites moins deux cellules de détection optiques, l'extrémité de canal étant marquée au moyen de deux trous placés côte à côte ou superposés.

12. Procédé selon la revendication 11, comprenant un système sans fil Lan, WLAN, un système radio à diffusion ciblée, un système infrarouge ou un système Bluetooth pour la communication entre l'unité de commande et l'unité de contrôle.

13. Procédé selon l'une au moins des revendications 11 - 12, comprenant, par ailleurs, une étape de préparation d'un moyen de réception de charges (25), notamment un appareil de desserte des rayonnages ou transstockeur, devant l'extrémité de canal, et de signalement à la navette (1) que le moyen de réception de charges (25) est prêt.

14. Procédé selon la revendication 13, d'après lequel lorsque la navette (1) est arrivée à l'arrêt dans sa position instantanée actuelle, elle ne peut quitter cette position que lorsque l'unité de contrôle reçoit, de l'unité de commande, le signalement indiquant que le moyen de réception de charges (25) est prêt.
